# EUROPEAN PATENT APPLICATION

(11) **EP 3 328 114 A1**
(43) Date of publication of application: **30.05.2018**
(21) Application number: 16829988.1
(22) Date of filing: 03.06.2016
(51) Int. Cl.: H04W 24/02, H04W 28/06, H04W 88/14, H04W 92/24

(54) **SERVICE CAPABILITY EXPOSURE FUNCTION ENTITY, HOME SUBSCRIBER SERVER, MESSAGE TRANSMISSION METHOD, AND NON-TEMPORARY COMPUTER READABLE MEDIUM**

(30) Priority: 24.07.2015 JP 2015146535
(71) Applicant: NEC Corporation, Tokyo 108-8001 (JP)
(72) Inventor: INOUE, Tetsuo, Tokyo 108-8001 (JP)
(74) Representative: Vossius & Partner Patentanwälte Rechtsanwälte mbB
(86) International application number: PCT/JP2016/002708
(87) International publication number: WO 2017/017879

(57) **Abstract**

The present disclosure aims to provide a SCEF entity which can transmit a plurality of communication patterns to another core network apparatus without increasing a processing load. The SCEF entity (10) according to the present disclosure includes: a control unit (11) that sets first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and a transmitting unit (12) that transmits the transmission message to a HSS (20) that manages information of the terminal.

## Description

### Technical Field

The present invention relates to a SCEF entity, a HSS, a message transmitting method and a program. More particularly, the present invention relates to a SCEF entity, a HSS, a message transmitting method and a program which transmit a message including a validity time.

### Background Art

3GPP (3rd Generation Partnership Project) which defines a communication technique used in a mobile communication system considers efficient accommodation of IoT (Internet of Things) devices which execute autonomous communication without a user's operation. The IoT devices may be referred to as, for example, M2M (Machine to Machine) devices or MTC (Machine Type Communication) devices.

Non-Patent Literature 1 discloses an operation of a core network apparatus in a case where an AS (Application server) communicates with a UE (User Equipment) which is a MTC device. The core network apparatus is, for example, a MME (Mobility Management Entity), a HSS (Home Subscriber Server) and a SCEF (Service Capability Exposure function) whose operations are defined by the 3GPP.

More specifically, Non-Patent Literature 1 defines processing of transmitting and receiving a communication pattern of the UE transmitted from the AS between the core network apparatuses. The communication pattern of the UE defines, for example, whether or not the UE periodically performs communication or whether or not the UE moves.

Further, a validity time is defined for the communication pattern transmitted and received between the core network apparatuses. Each core network apparatus communicates with the UE according to a specified communication pattern during the defined validity time.

### Citation List

### Non Patent Literature

NPL 1: 3GPP TS23.682 V13.2.0 (2015-06)

### Summary of Invention

### Technical Problem

In this regard, Non-Patent Literature 1 defines that the validity times indicated in respective communication patterns do not overlap each other. Generally, according to this definition, when each core network apparatus transmits a plurality of communication patterns related to a UE to another core network apparatus, every time a communication pattern including a continuous validity time is changed, each core network apparatus transmits a message in which the changed communication pattern and the continuous validity time are set to the another core network apparatus.

However, when the core network apparatus transmits a message in which a new continuous validity time is set to the another core network apparatus every time a communication pattern is changed, there are the following problems: the number of messages transmitted and received between the core network apparatuses increases, and a processing load of each core network apparatus increases .

An object of the present invention is to provide a SCEF entity, a HSS, a message transmitting method and a program which can transmit a plurality of communication patterns to another core network apparatus without increasing a processing load.

### Solution to Problem

A SCEF entity according to a first aspect of the present disclosure includes: control means for setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and transmitting means for transmitting the transmission message to a HSS that manages information of the terminal.

A HSS according to a second aspect of the present disclosure includes: control means for setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and transmitting means for transmitting the transmission message to a MME that manages movement of the terminal.

A message transmitting method according to a third aspect of the present disclosure includes: setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and transmitting the transmission message to a network apparatus that manages information of the terminal.

A program for causing a computer to execute according to a fourth aspect of the present disclosure includes: setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and transmitting the transmission message to a network apparatus that manages information of the terminal.

### Advantageous Effects of Invention

The present invention can provide a SCEF entity, a HSS, a message transmission method and a program which can transmit a plurality of communication patterns to another core network apparatus without increasing a processing load.

### Brief Description of Drawings

Fig. 1 is a configuration diagram of a SCEF entity according to a first exemplary embodiment 1.
Fig. 2 is a configuration diagram of a communication system according to a second exemplary embodiment 2.
Fig. 3 is a view illustrating a flow of processing of transmitting information related to a communication pattern according to the second exemplary embodiment 2.
Fig. 4 is a view illustrating a configuration of a UCR command according to the second exemplary embodiment 2.
Fig. 5 is a view illustrating a configuration of a CP-Parameters AV according to the second exemplary embodiment 2.
Fig. 6 is a view illustrating a configuration of a CP-Parameter-Set AVP according to the second exemplary embodiment 2.
Fig. 7 is a view illustrating a configuration of a Validity-Time AVP according to the second exemplary embodiment 2.
Fig. 8 is a view illustrating an AVP configuration set to a Time-Zone AVP according to the second exemplary embodiment 2.
Fig. 9 is a view illustrating a configuration of a UCA Command according to the second exemplary embodiment 2.
Fig. 10 is a configuration diagram of a HSS according to the second exemplary embodiment 2.
Fig. 11 is a view illustrating a flow of processing of transmitting a CP Parameter to a MME according to the second exemplary embodiment 2.
Fig. 12 is a view illustrating a configuration of an IDR Command message according to the second exemplary embodiment 2.

### Description of Embodiments

### (First Exemplary Embodiment 1)

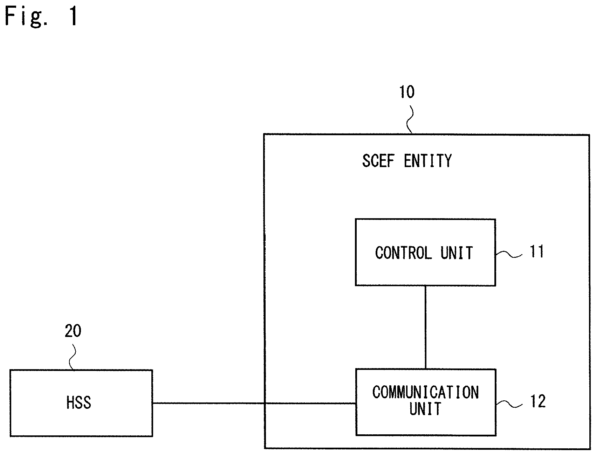

Exemplary embodiments of the present invention will be described below with reference to the drawings. First, a configuration example of a SCEF entity 10 according to the first exemplary embodiment 1 of the present invention will be described with reference to Fig. 1. The SCEF entity 10 is an apparatus which executes a SCEF whose operation is defined by 3GPP. The SCEF entity 10 may be a computer apparatus which operates when a processor executes a program stored in a memory.

The SCEF entity 10 includes a control unit 11 and a communication unit 12. The control unit 11 and the communication unit 12 which compose the SCEF entity 10 may be software or modules which execute processing when the processor executes programs stored in the memory. Alternatively, the control unit 11 and the communication unit 12 may be circuits or chips.

The control unit 11 sets a plurality of communication pattern (Communication Pattern) set information to one transmission message. The communication pattern set information is information indicating a communication pattern of a terminal in a certain validity time. The communication pattern of the terminal defines an operation pattern such as whether or not the terminal periodically performs communication or whether or not a UE moves.

The control unit 11 sets the respective validity times such that the validity time defined in one communication pattern set information and the validity time defined in the other communication pattern set information do not overlap. The control unit 11 outputs the generated transmission message to the communication unit 12.

The communication unit 12 transmits to a HSS the transmission message outputted from the control unit 11. The HSS manages information of the terminal which indicates a communication pattern in the transmission message. The information of the terminal may be, for example, Subscription information of a user who holds the terminal.

As described above, when transmitting to the HSS a plurality of communication patterns of different validity times related to one terminal, the SCEF entity 10 can transmit to the HSS all communication patterns by one transmission message. Consequently, the SCEF entity 10 can reduce the number of transmission messages between the SCEF entity 10 and a HSS 20 compared to a case where the transmission message is generated per communication pattern and the generated transmission message is transmitted to the HSS 20.

By reducing the number of transmission messages, it is possible to reduce processing loads of the SCEF entity 10 and the HSS 20.

### (Second Exemplary Embodiment 2)

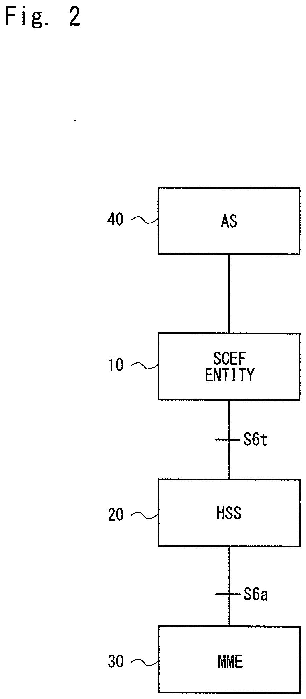

Next, a configuration example of a communication system according to the second exemplary embodiment 2 of the present invention will be described with reference to Fig. 2. The communication system in Fig. 2 includes an AS 40, a SCEF entity 10, a HSS 20 and a MME 30. The SCEF entity 10, the HSS 20, and the MME 30 are node apparatuses whose operations or items of processing contents are defined by 3GPP. Further, a S6t interface is defined between the SCEF entity 10 and the HSS 20 by the 3GPP. Furthermore, a S6a interface is defined between the HSS 20 and the MME 30 by the 3GPP.

The AS 40 is a server which provides a service by using information transmitted from a UE managed as an IoT device by the MME 30. The AS 40 may be referred to as, for example, an IoT server. The AS 40 may be a server which controls or determines a communication pattern of the UE which is the IoT device. In addition, the AS 40 determines a communication pattern related to a UE_A. When determining the communication pattern related to the UE_A, the AS 40 transmits the information related to the determined communication pattern to the SCEF entity 10.

The SCEF entity 10 transmits the information of the communication pattern related to the UE-A transmitted from the AS 40 according to a predetermined format, to the HSS 20 via the S6t interface. The HSS 20 transmits the communication pattern related to the UE_A to the MME 30 which manages the UE_A via the S6a interface.

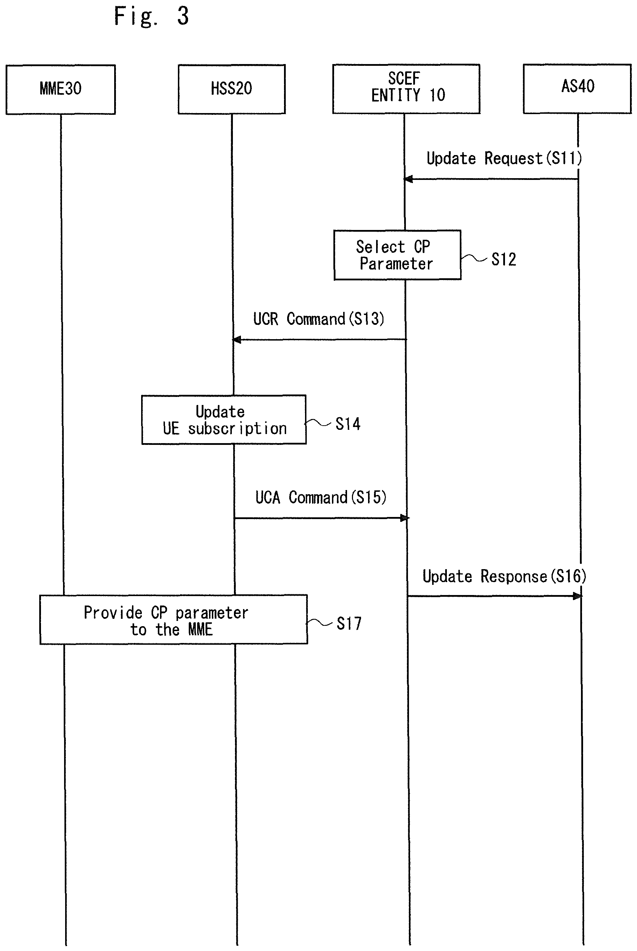

Next, a flow of processing of transmitting information related to a communication pattern according to the second exemplary embodiment 2 of the present invention will be described with reference to Fig. 3. First, the AS 40 transmits to the SCEF entity 10 an Update Request message to which a communication pattern parameter (CP Parameter) is set (S11). The CP Parameter includes a plurality of CP Parameter sets, and each CP Parameter Set is associated with a validity time.

Next, the SCEF entity 10 selects or extracts the CP Parameter set to the Update Request message (S12). Next, the SCEF entity 10 transmits an Update-Communication-Pattern-Request (UCR) Command message to which the selected CP Parameter is set, according to a format defined by the S6t interface (S13). The S6t interface uses, for example, a Diameter protocol.

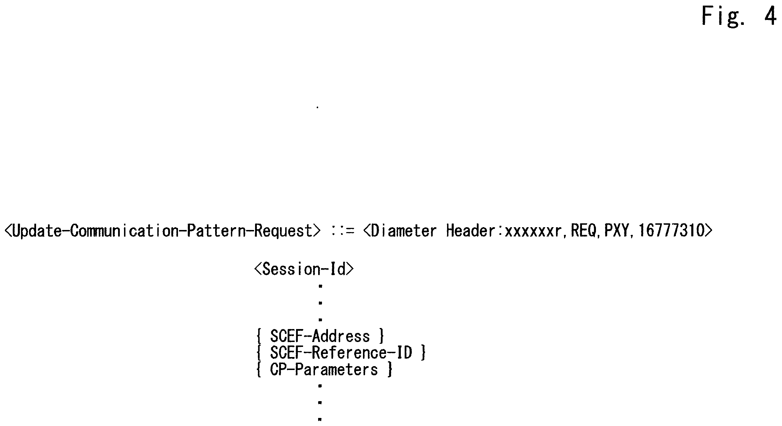

Hereinafter, a configuration of the UCR Command will be described with reference to Fig. 4. A plurality of AVPs (Attribute Value Pair) are set to the UCR Command. For example, a SCEF-Address AVP, a SCEF-Reference-ID AVP and a CP Parameters AVP are set to the UCR Command.

The SCEF-Address AVP is used as identification information of the SCEF entity 10 which is a transmission source for transmitting the UCR Command. Further, the SCEF-Reference-ID AVP is used to identify a reference task of the SCEF entity 10.

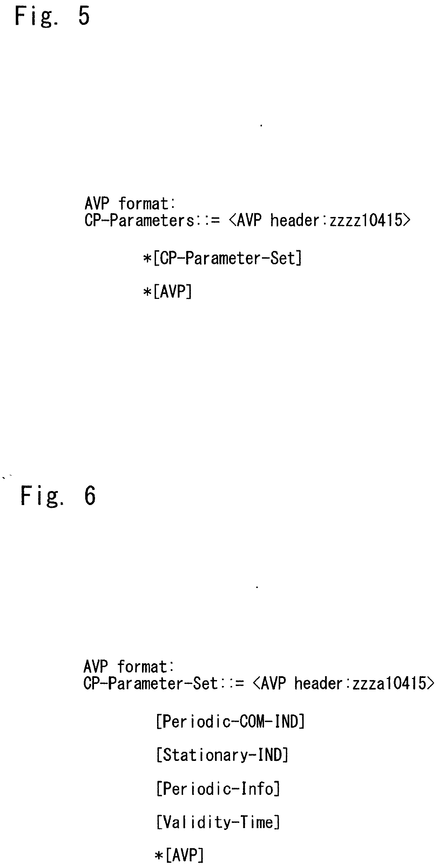

The CP-Parameters AVP includes one or more CP-Parameter-Set AVPs per UE. Further, the CP-Parameter-Set AVP is associated with a Validity Time. Each Validity Time is set to a plurality of CP-Parameter-Set AVP set per UE without overlapping respective Validity Times. Fig. 5 illustrates that the one or more CP-Parameter-Set AVPs are set to the CP-Parameters AVP.

Next, the AVP set to the CP-Parameter-Set AVP will be described with reference to Fig. 6. A Periodic-COM-IND AVP, a Stationary-IND AVP, a Periodic-Info AVP and a Validity-Time AVP are set to the CP-Parameter-Set AVP.

The Periodic-COM-IND AVP defines whether the UE periodically performs communication or performs communication in response to a request of the AS 40. For example, ON_DEMAND_COMMUNICATION indicating that the UE performs communication in response to the request of the AS 40 or PERIODIC_COMMUNCATION indicating that the UE periodically performs communication is set to the Periodic-COM-IND AVP.

The Stationary-IND AVP defines whether or not the UE moves. For example, MOBILE indicating that the UE moves or STATIONARY indicating that the UE does not move is set to the Stationary-IND AVP.

A Duration-Timer and an Interval Timer in a case where the UE periodically performs communication are set to the Periodic-Info AVP. The Duration-Timer indicates a communication continuation time of one-time communication. The Duration-Timer may be indicated by using units of seconds, minutes or hours. The Interval-Timer indicates a communication interval of the UE. The Interval-Timer may be indicated by using units of seconds, minutes or hours.

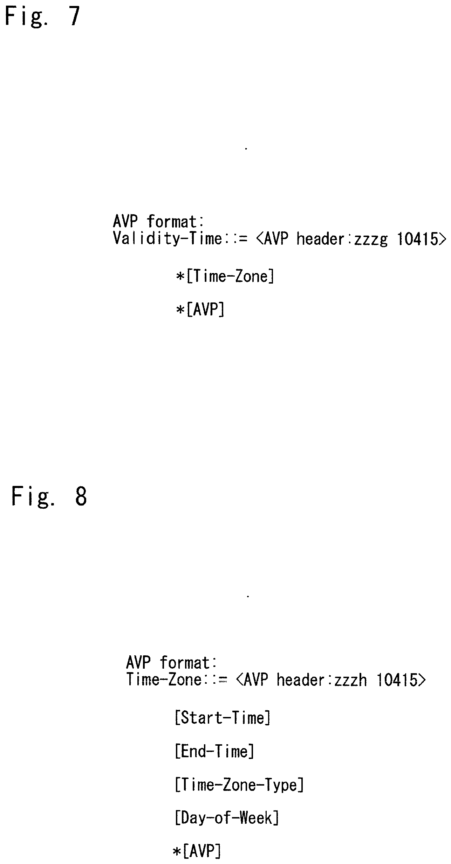

The Validity-Time AVP indicates a validity time of the CP-Parameter-Set AVP. In this regard, the AVP set to the Validity-Time AVP will be described with reference to Fig. 7. One or more Time-Zone AVPs are set to the Validity-Time AVP. Further, the AVP set to the Time-Zone AVP will be described with reference to Fig. 8. A Start-Time AVP, an End-Time AVP, a Time-Zone-Type AVP and a Day-of-Week AVP are set to the Time-Zone AVP.

The Start-Time AVP indicates a start time of the Validity Time. Further, the End-Time AVP indicates an end time of the Validity Time.

The Time-Zone-Type AVP indicates a cycle to which the Validity-Time AVP is set. For example, Hourly indicating to set the Validity-Time AVP per hour, Daily indicating to set the Validity-Time AVP per day, Weekly indicating to set Validity-Time AVP per week, and Monthly indicating to set the Validity-Time AVP per month are set to the Time-Zone-Type AVP. When, for example, 1 o'clock 15 minutes is set to the Start-Time AVP and Hourly is set to the Time-Zone-Type AVP, the Validity-Time AVP is set per hour, i.e., to, for example, 2 o'clock 15 minutes and 3 o'clock 15 minutes. Further, when 1 o'clock 15 minutes is set to the Start-Time AVP and Daily is set to the Time-Zone-Type AVP, the Validity-Time AVP is set to 1 o'clock 15 minutes every day. Furthermore, when 1 o'clock 15 minutes is set to the Start-Time AVP and Weekly is set to the Time-Zone-Type AVP, the Validity-Time AVP is set again to 1 o'clock 15 which comes seven days later. Still furthermore, when 1 o'clock 15 minutes is set to the Start-Time AVP and Monthly is set to the Time-Zone-Type AVP, the Validity-Time AVP is set again to 1 o'clock 15 which comes one month later. Thus, the Validity Time indicating the validity time of one CP-Parameter-Set AVP may come at a plurality of discontinuous and periodic times.

The Day-of-Week AVP indicates a day of a week to which the Validity-Time AVP is set.

Referring back to Fig. 3, when receiving the UCR Command, the HSS 20 updates Subscription information of the UE based on the CP Parameter Set AVP set to the UCR Command (S14). Next, the HSS 20 transmits an Update-Communication-Pattern-Answer (UCA) Command message as a response to the UCR Command message to the SCEF entity 10 (S15).

When receiving the UCR Command message including the CP Parameters AVP in step S13 in Fig. 3, the HSS 20 holds a CP Parameters List as the Subscription information.

Further, the HSS 20 holds the one or more CP-Parameter-Set AVPs included in the CP Parameters AVP as a CP-Parameter-Set. Furthermore, the HSS 20 holds the Periodic-COM-IND AVP, the Stationary-IND AVP, the Periodic-Info AVP and the Validity-Time AVP included in the CP-Parameter-Set AVP as a Periodic Communication Indication, a Stationary Indication, Periodic Information and a Validity Time.

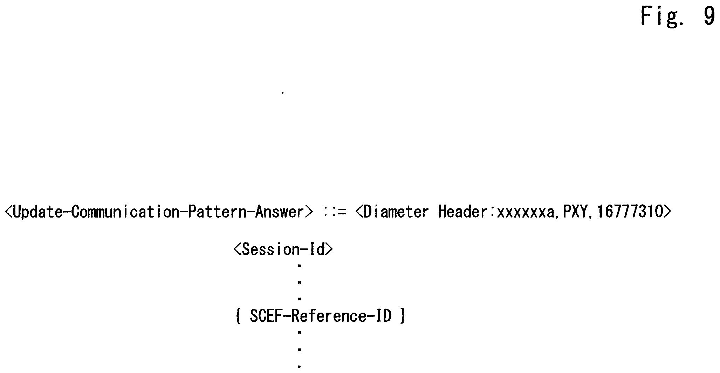

Hereinafter, a configuration of the UCA Command will be described with reference to Fig. 9. A plurality of AVPs are set to the UCA command. For example, the SCEF-Reference-ID AVP is set to the UCA command. The SCEF-Reference-ID AVP set to the UCA Command has the same contents as the SCEF-Reference-ID AVP set to the UCR command.

Referring back to Fig. 3, the SCEF entity 10 transmits an Update Response message as a response to the Update Request message in step S11 to the AS 40 (S16).

Further, the HSS 20 executes processing of transmitting the CP Parameters transmitted from the SCEF entity 10 to the MME 30 in step S17 (S17).

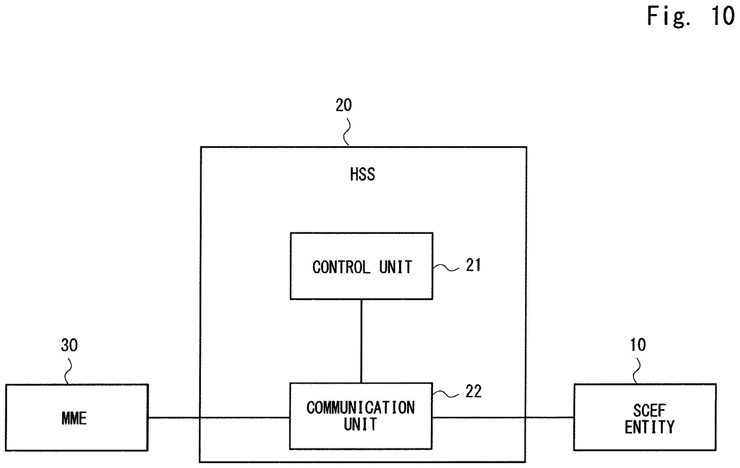

Hereinafter, a configuration example of the HSS 20 which executes the processing in step S17 in Fig. 3 will be described with reference to Fig. 10. The HSS 20 includes a control unit 21 and a communication unit 22. The control unit 21 and the communication unit 22 which compose the HSS 20 may be software or modules which execute processing when a processor executes programs stored in a memory. Alternatively, the control unit 21 and the communication unit 22 may be circuits or chips.

When receiving the CP Parameters transmitted from the SCEF entity 10, the control unit 21 generates an Insert Subscriber Data Request (IDR) Command message to which the received CP Parameters are set. The control unit 21 outputs the IDR Command message to the communication unit 22.

The communication unit 22 receives the UCR Command transmitted from the SCEF entity 10. The communication unit 22 outputs the received UCR Command to the control unit 21. Further, the communication unit 22 transmits to the MME 30 the IDR Command message generated by the control unit 21.

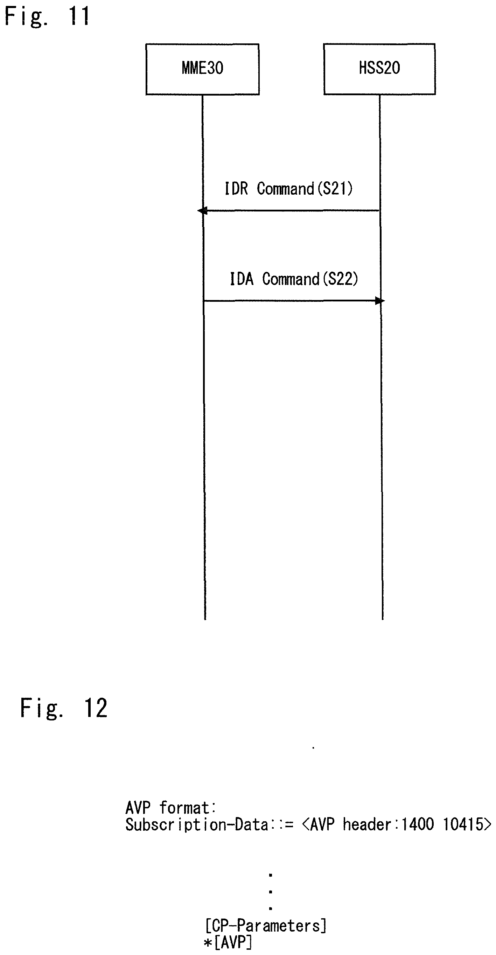

Next, a flow of detailed processing in step S17 in Fig. 3 according to the second exemplary embodiment 2 of the present invention will be described with reference to Fig. 11.

When receiving the CP Parameters from the SCEF entity 10, the HSS 20 transmits to the MME 30 the IDR Command message to which the received CP Parameters are set (S21). The HSS 20 transmits the IDR Command message to the MME 30 according to the format defined by the S6a interface. The S6a interface uses, for example, the Diameter protocol.

Hereinafter, a configuration of the IDR Command message will be described with reference to Fig. 12. A plurality of AVPs are set to the IDR Command. As illustrated in, for example, Fig. 12, the CP Parameters AVP is set to the IDR Command. The CP Parameters AVP set to the IDR Command is the same as those in Figs. 5 to 8, and therefore will not be described in detail.

Referring back to Fig. 11, when receiving the IDR Command, the MME 30 transmits an Insert Subscriber Data Answer (IDA) Command message as a response message to the HSS 20 (S22).

When receiving the IDR Command message including the CP Parameters AVP in step S21 in Fig. 11, the MME 30 holds the CP Parameters List as the Subscription information.

Further, the MME 30 holds the one or more CP-Parameter-Set AVPs included in the CP Parameters AVP as the CP-Parameter-Set. Furthermore, the MME 30 holds the Periodic-COM-IND AVP, the Stationary-IND AVP, the Periodic-Info AVP and the Validity-Time AVP included in the CP-Parameter-Set AVP as the Periodic Communication Indication, the Stationary Indication, the Periodic Information and the Validity Time.

As described above, the SCEF entity 10 according to the second exemplary embodiment 2 of the present invention can transmit to the HSS 20 one UCR Command message to which a plurality of CP-Parameter-Set AVPs are set. Further, the HSS 20 can transmit to the MME 30 one IDR Command message to which a plurality of CP-Parameter-Set AVPs are set. Furthermore, the SCEF entity 10 and the HSS 20 can set the Validity time set to each CP-Parameter-Set AVP in the UCR Command message and the IDR Command message without overlapping each other. Still further, one Validity Time may come at a plurality of discontinuous and periodic times.

Consequently, every time the Stationary-IND AVP set to the CP Parameters AVP is changed, the SCEF entity 10 and the HSS 20 can reduce the number of messages compared to transmission of a UCR Command and an IDR Command to which CP Parameters AVPs including Validity times of new continuous times are set.

Further, the SCEF entity 10 and the HSS 20 can satisfy the definition of the 3GPP that Validity times of different communication patterns set to CP Parameters AVPs do not overlap each other.

The present invention has been described as a hardware configuration in the above embodiments. However, the present invention is not limited to this. The present invention can also realize processing of the SCEF, the HSS and the MME by causing a CPU (Central Processing Unit) to execute a computer program.

In the above example, the program can be stored by using various types of non-transitory computer readable media, and be supplied to a computer. The non-transitory computer readable media include various types of tangible storage media. The non-transitory computer readable media include, for example, magnetic recording media (e.g., flexible disks, magnetic tapes and hard disk drives), magnetooptical recording media (e.g., optical magnetic disks), CD-ROMs (Read Only Memory), CD-Rs, CD-R/Ws and semiconductor memories (e.g., mask ROMs, PROMs (Programmable ROM), EPROMs (Erasable PROM), flash ROMs and RAMs (Random Access Memory)). Further, the programs may be supplied to the computers via various types of transitory computer readable media. The transitory computer readable media include, for example, electrical signals, optical signals and electromagnetic waves. The transitory computer readable media can supply the programs to the computers via wired communication channels such as electrical cables or optical fibers or wireless communication channels.

In addition, the present invention is not limited to the above embodiments, and can be optionally changed without departing from the scope of the invention.

The present invention has been described above with reference to the embodiments. However, the present invention is not limited to the above. The configurations and the details of the present invention can be variously modified within the scope of the invention as long as one of ordinary skill in the art can understand the modifications.

This application claims priority to Japanese Patent Application No. 2015-146535 filed on July 24, 2015, the entire contents of which are incorporated by reference herein.

### Reference Signs List

- 10: SCEF ENTITY
- 11: CONTROL UNIT
- 12: COMMUNICATION UNIT
- 20: HSS
- 21: CONTROL UNIT
- 22: COMMUNICATION UNIT
- 30: MME
- 40: AS

## Claims

1. A SCEF entity comprising:
control means for setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and
transmitting means for transmitting the transmission message to a HSS that manages information of the terminal.

2. The SCEF entity according to Claim 1, wherein the control means sets a cycle to which the first and second validity times are applied.

3. The SCEF entity according to Claim 2, wherein the control means sets whether to apply the first and second validity times per hour, per day, per week or per month.

4. The SCEF entity according to any one of Claims 1 to 3, wherein the communication pattern of the terminal includes at least one of whether or not the terminal moves and whether or not the terminal periodically performs communication.

5. The SCEF entity according to any one of Claims 1 to 4, wherein
the control means sets the first and second communication pattern set information to a UCR (Update-Communication-Pattern-Request) Command message, and
the transmitting means transmits the UCR Command message to the HSS.

6. The SCEF entity according to any one of Claims 1 to 5, wherein the control means sets the first and second communication pattern set information to a CP-Parameters AVP (Attribute Value Pair) of a Diameter protocol.

7. A HSS comprising:
control means for setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and
transmitting means for transmitting the transmission message to a MME that manages movement of the terminal.

8. The HSS according to Claim 7, wherein the control means sets a cycle to which the first and second validity times are applied.

9. The HSS according to Claim 8, wherein the control means sets whether to apply the first and second validity times per hour, per day, per week or per month.

10. The HSS according to any one of Claims 7 to 9, wherein the communication pattern of the terminal includes at least one of whether or not the terminal moves and whether or not the terminal periodically performs communication.

11. The HSS according to any one of Claims 7 to 10, wherein
the control means sets the first and second communication pattern set information to an IDR (Insert-Subscriber-Data-Request) Command message, and
the transmitting means transmits the IDR Command message to the MME.

12. The HSS according to any one of Claims 7 to 11, wherein the control means sets the first and second communication pattern set information to a CP-Parameters AVP (Attribute Value Pair) of a Diameter protocol.

13. A message transmitting method comprising:
setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and
transmitting the transmission message to a network apparatus that manages information of the terminal.

14. A non-transitory computer readable medium having stored thereon a program for causing a computer to execute:
setting first communication pattern set information and second communication pattern set information to one transmission message, the first communication pattern set information indicating a communication pattern of a terminal in a first validity time and the second communication pattern set indicating the communication pattern of the terminal in a second validity time that does not overlap the first validity time; and
transmitting the transmission message to a network apparatus that manages information of the terminal.
